## Europäisches Patentamt

## European Patent Office

## Office européen des brevets

(11) Publication number: **0 154 424**
**B1**

(12) # EUROPEAN PATENT SPECIFICATION

(45) Date of publication of patent specification: **14.06.89**

(51) Int. Cl.⁴: **B 60 B 35/18,** F 16 C 33/78, F 16 J 15/32

(21) Application number: **85300895.1**

(22) Date of filing: **11.02.85**

(54) Unitized wheel bearing seal assembly.

(30) Priority: **05.03.84 US 586343**

(43) Date of publication of application:
**11.09.85 Bulletin 85/37**

(45) Publication of the grant of the patent:
**14.06.89 Bulletin 89/24**

(84) Designated Contracting States:
**DE GB NL SE**

(56) References cited:
**US-A-3 101 954**
**US-A-3 363 911**

(73) Proprietor: **GENERAL MOTORS CORPORATION**
**General Motors Building 3044 West Grand Boulevard**
**Detroit Michigan 48202 (US)**

(72) Inventor: **Christiansen, Paul John**
**509 Marshall Avenue**
**Sandusky Ohio 44870 (US)**

(74) Representative: **Haines, Arthur Donald et al**
**Patent Section (F6) Vauxhall Motors Limited**
**P.O. Box 3 Kimpton Road**
**Luton, Beds. LU2 0SY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a unitized wheel bearing seal assembly as specified in the preamble of claim 1, for example as disclosed in GB-A-2 107 024.

Specifically, the invention is concerned with such a seal assembly of the unsprung type.

Unitized seals are well known in the prior art, and generally comprise radially inner and outer metal casings which are nested together and spaced radially from each other to create a generally annular sealing space therebetween. The casings do not touch, but a seal located between the casings seals the space. The unit may be separately handled, and be press-fitted between a shaft and bore or between cylindrical surfaces of races of a radial bearing. Such seals generally include a garter-spring type seal for wear take-up of the sealing lip, but this can create excessive torque in a radial bearing of relatively large diameter such as may be found in a radial bearing large enough to fit over a constant velocity joint. Although unsprung unitized seals do exist in the art, they are not well suited for the application desired, especially since such bearing applications, especially in automotive wheel bearings, involve high temperatures and high pressures which it may be necessary to vent, as well as the necessity of excluding contaminants such as water and particulates, in addition to the need for maintaining a good lubricant seal.

The prior US-A-2 240 252 discloses an unsprung unitized oil seal interposed between a shaft and a bore. However, oil seals are not, in general, particularly applicable to the very different requirements of a grease seal as used in the environment of a wheel bearing. The structure disclosed in the said US-A-2 240 252 also includes too many surfaces in rubbing contact for it to run with sufficiently low torque.

The prior US-A-3 101 954 discloses a structure that is suitable for heavy farm machinery and is designed to allow heavy particulates to wedge between the casings to more tightly bias a sealing leg (sealing lip). Such a design would not be suitable in the higher-speed automotive type of application, as the torque would be far too high.

The above-mentioned GB-A-2 107 024 discloses an unsprung unitized seal in an over CV application, in other words in a bearing design utilising a large-diameter bearing capable of fitting around the outer diameter of a constant velocity universal drive joint. However, this prior disclosure appears to illustrate a single casing, which in operation would rub between the bearing races as they rotated relative to one another, to create extremely high torque drag.

The present invention is concerned with achieving a unitized seal assembly which overcomes the shortcomings of the prior art with a design suited to act as a low-torque grease seal and particulate excluder in the environment of a high-speed and high-temperature wheel bearing.

To this end a unitized wheel bearing seal assembly in accordance with the present invention is characterised by the measures specified in the characterising portion of claim 1.

In a preferred arrangement of a unitized wheel bearing seal assembly in accordance with the present invention, the unitized assembly is adapted to be press-fitted between a pair of radial bearing races, namely an inner race which is rotatable with the outside of a constant velocity joint housing and an outer race which is connected to an automotive suspension member and thus is not rotatable relative to the vehicle. The assembly includes a pair of stamped sheet metal unitary casings. A first of these casings includes a cylindrical wall press-fitted within a bore in the outer bearing race, with a circular edge at one end and an integral, radially inwardly extending annular wall at the other end. A second of these casings includes a cylindrical wall concentric with the first cylindrical wall and press-fitted to a cylindrical surface of the outer diameter of the inner race, and an integral, radially outwardly extending annular wall disposed in the same plane as the circular edge of the first casing.

An unsprung elastomer seal bonded to the annular wall of the first casing includes a pair of integral lips. A first of these lips extends radially inwardly into sealing engagement with the cylindrical wall of the second casing at an acute angle. A second of these lips extends radially outwardly into sealing engagement with the annular wall of the second casing, also at an acute angle with respect thereto.

The assembly may be press-fitted between the bearing races by means of a suitable tool, with the circular edge of the first casing and the annular wall of the second casing maintained co-planar and registered with a suitable stop, such as the face of a bearing race, which will leave the annular wall exposed to ambient and the sealing lips exposed to a lubricant reservoir of the bearing. The orientation of the lips allows them to flex away from their sealing surfaces under the force of pressurized lubricant from the reservoir, but they act as one-way gates and will not flex back to permit contaminant entry.

Additional advantages provided by the structure include the feature that the annular wall of the second casing acts as a rotating slinger to throw contaminants outwardly and away from the seal to help prevent their initial entry. Those contaminants which do enter can easily drain out of the annular space between the casings, because the circular edge of the first casing provides no barrier to their egress. A further feature is that wear of the second seal lip on the annular wall of the second casing may be adjusted for by tapping the second casing slightly in an axial direction towards the first casing. The egress of lubricant past the lips will also help by deferring the wear process.

In the drawings:

Figure 1 is a general view showing part of a vehicle suspension and drive shaft and wheel with a unitized wheel bearing seal assembly in accordance with the present invention in place in a wheel bearing; and

Figure 2 is an enlarged view of a portion of Figure 1, showing details of the seal assembly in accordance with the invention.

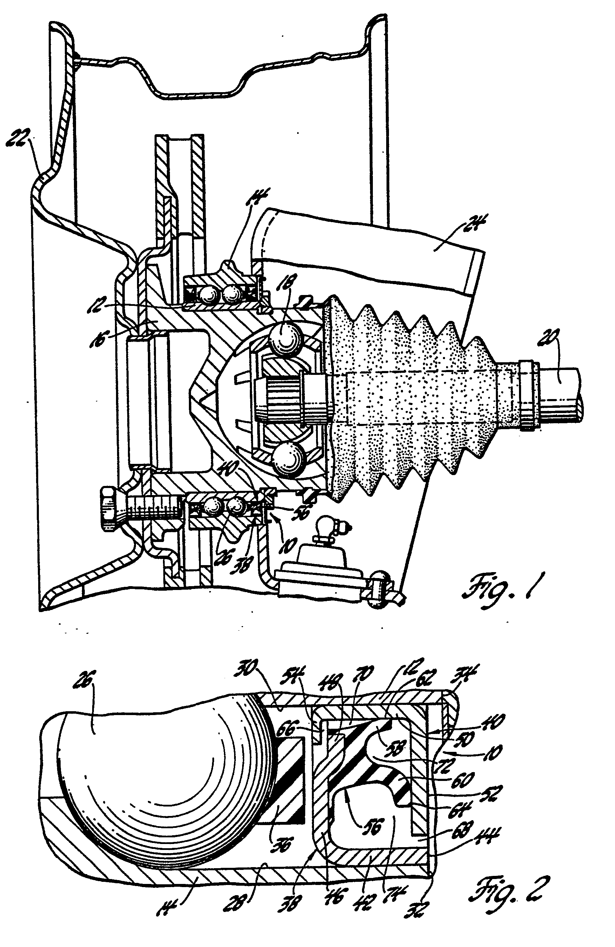

With reference first to Figure 1, a unitized wheel bearing assembly seal in accordance with the present invention and designated generally 10 is shown press-fitted between inner 12 and outer 14 races of a radial bearing. The inner race 12 is affixed to a housing 16 of a conventional constant velocity joint (CV joint) 18, which is in turn driven by a drive shaft 20. The CV joint 18 drives a wheel 22 and the outer race 14 is joined to a suspension member 24, whereby the inner race 12 is rotatable relative to the non-rotatable outer race 14. In bearing designs of this type, known as over CV designs, the diameter of a ball complement 26 is relatively large, and consequently the seals will necessarily be of a large diameter as well. In a conventional garter-spring seal assembly, this could lead to excessive seal torque. Other potential problems with such a design are the high speed of operation and the proximity of the seal assembly to the brake disc and the CV joint, all of which could lead to high temperature of a lubricant reservoir surrounding the ball complement 26. In addition, the ambient side of the seal assembly 10 is exposed to particulates and contaminants such as water, which it is desirable and necessary to exclude.

In Figure 2 of the drawing, one of the wheel bearing seal assemblies 10 in accordance with the invention is shown enlarged. The outer bearing race 14 and the inner bearing race 12 have respective concentric cylindrical bores 28 and 30 therein which axially confine either side of the ball complement 26 and which are adjacent to flat bearing faces 32 and 34 respectively. The ball complement 26 and a conventional ball cage 36 are surrounded by a reservoir of lubricant grease, not shown.

The sealing assembly 10 includes a pair of single-piece (that is, unitary) stamped sheet metal casings, comprising a first, outer casing 38 and a second, inner casing 40. The outer casing 38 includes a cylindrical wall 42 which has a planar circular edge 44 at one end and a radially inwardly extending, inner annular wall 46 at the other end which terminates in an inwardly crimped edge 48. The inner casing 40 includes a cylindrical wall 50 having an outer, radially outwardly extending annular wall 52 at one end and a rolled-over edge 54 at the other end. The casings 38 and 40 are nested together as shown, and the edge 54 is rolled over as a last step to maintain the two together.

Bonded to the inside of the inner annular wall 46 is an elastomer seal designated generally 56 which is unsprung and includes a first sealing lip 58 and a second sealing lip 60. The first sealing lip 58 extends generally radially inwardly and axially outwardly towards the inside of the outer annular wall 52. The second sealing lip 60 extends generally radially outwardly and axially outwardly towards the inside of the outer annular wall 52. The sealing lips 58 and 60 are generally straight in their disassembled configuration, and of a length such that, when the casings 38 and 40 are assembled as described, the edge 62 of the first sealing lip 58 is brought into resilient sealing engagement with the inside of the cylindrical wall 50, and the edge 64 of the second sealing lip 60 is brought into sealing engagement with the inside of the outer annular wall 52. After this assembly, the lips 58 and 60 are bent slightly in the orientation shown, such that each forms an acute angle with respect to the surface against which it seals. This orientation provides the benefits and features described below.

After the casings 38 and 40 have been nested and assembled together, the seal assembly 10 is press-fitted between the bores 28 and 30 by any suitable tool which engages the outside of the outer annular wall 52 and the circular edge 44. The casings 38 and 40 are thereby maintained in the same plane, and the seal assembly 10 is pressed inwardly until the tool engages a suitable stop member, which could be either face 32 or face 34, or both of these faces. This press-fitting serves to define the axial spacing of the crimped edge 48 from the rolled edge 54, thereby defining a first annular gap 66. The force with which the edge 64 of the lip 60 is biased into the inside of the outer annular wall 52 is also thereby determined. The radial spacing between the bores 28 and 30 determines the radial spacing of the terminus of the outer annular wall 52 from the inside of the cylindrical wall 42, thereby defining a second annular gap 68. These gaps may be quite small, as long as there is no rubbing between the casings 38 and 40. The orientation of the lips 58 and 60 defines three cavities. A first cavity 70 opens to the first annular gap 66 and thence to the lubricant around the ball complement 26. A second cavity 72 is formed between the lips 58 and 60, and a third, contaminant-catching cavity 74 opens to the second annular gap 68 and thence to ambient. A grease fill may be put into the second cavity 72 before the casings 38 and 40 are assembled, if desired.

This orientation and co-operation of the lips 58 and 60 relative to the other elements of the casings 38 and 40 provides several functions and benefits. Since the outer casing 38 is stationary relative to the vehicle, there is no centrifugal action tending to throw the lips 58 and 60 out of sealing engagement. In addition, any lubricant under pressure entering the first cavity 70 may flex the lip 58 radially outwardly away from the cylindrical wall 50, to allow egress of the lubricant to the second cavity 72. Additional pressure can flex the second lip 60 axially inwardly away from the outer annular wall 52, to allow egress to the third cavity 74 and finally to ambient. Thus, the lips 58 and 60 do not bind or increase their bias upon their respective walls. The egress action of the lubricant helps to prevent the entry of contaminants from ambient, and the edges 62 and 64 are kept lubricated as well. However, the lips 58 and 60, because of their orientation, act as one-way gates and cannot flex in the opposite direction, so that particulates and contaminants cannot move in the other direction from ambient. The shape of the third cavity 74 allows easy exit of any water which may enter the annular gap 68. The outside of the lip 60 is bent so as to have no undercuts or pockets, and the circular edge 44 provides no barrier to the draining of water. In addition, the outer annular wall 52, since it rotates with the inner casing 40, will act as a centrifugal slinger to throw contaminants and water away from the annular gap 68. Furthermore, in the event of wear of the edge 64, the entire casing 40 can be tapped axially inwardly by means of a suitable tool. This will not affect the sealing engagement of the lip 58 but will increase the bias pressure of the edge 64 of the lip 60 against the inside of the annular wall 52, and thus the sealing engagement therebetween.

Some modifications of the design within the scope of the invention are easily made. Thus the terminus of the annular wall 52 could be flared outwardly to provide additional slinging action. As long as a portion of the annular wall 52 is flat and co-planar with the circular edge 44, the assembly 10 can be press-fitted by the use of a suitable tool. The angle and length of the sealing lips 58 and 60 may easily be changed to change the sealing pressures or bias involved, and thus the sealing engagement with their respective walls, all within the same envelope and with the same size casings 38 and 40.

In the unitized wheel bearing seal assembly which has been specifically described, the first casing 38 and the second casing 40 create the easily handled package of a unitized seal, and the first sealing lip 58 and second sealing lip 60, which constitute unsprung and low-friction sealing lips, retain lubricant while excluding contaminants. The angle and orientation of the lips 58 and 60 allow the venting of pressure, and prevent the lips from binding and increasing the seal torque when they are under pressure. The outer annular wall 52 of the casing 38 both acts as a slinger to throw contaminants away from the gap 68 and allows the casing 40 to be tapped inwardly to compensate for wear of the lip 60.

## Claims

1. A unitized wheel bearing seal assembly in which an annular sheet metal casing assembly (38, 40) housing a lip-type seal (56) is fitted between a non-rotatable cylindrical surface (28) and a rotatable cylindrical surface (30) concentric with the non-rotatable surface (28), characterised in that the bearing seal assembly comprises a unitary first sheet metal casing (38) having a cylindrical wall (42) adapted to be press-fitted to the non-rotatable cylindrical surface (28), a unitary second sheet metal casing (40) having a cylindrical wall (50) concentric with the cylindrical wall (42) of the first casing (38) and adapted to be press-fitted to the rotatable cylindrical surface (30) concentric with the non-rotatable surface (28), the second casing (40) having an axially outer side wall (52) adapted to be exposed to ambient and extending radially outwardly from its cylindrical wall (50), and a seal (56) bonded to the first casing (38) and including first (58) and second (60) unsprung integral lips, the first lip (58) extending into sealing engagement with the cylindrical wall (50) of the second casing (40) at an acute angle with respect thereto so as to be flexible radially outwardly away therefrom, the second lip (60) extending into sealing engagement with the axially outer side wall (52) at an acute angle with respect thereto so as to be flexible axially inwardly away from the said side wall (52), the sealing lips (58 and 60) further forming a lubricant cavity (72) therebetween, the angle and flexibility of the lips (58 and 60) being such that the said lips (58 and 60) act as one-way gates to allow ingress of lubricant to the cavity (72) and egress of lubricant from the cavity (72) to ambient but resist ingress of contaminants from ambient to the cavity (72).

2. A unitized wheel bearing seal assembly according to claim 1, characterised in that the axially outer side wall (52) of the second casing (40) extends radially outwardly from its cylindrical wall (50) towards the cylindrical wall (42) of the first casing (38) to create a minimal annular gap (68) therefrom, and the second lip (60) also cooperates with the cylindrical wall (50) of the second casing (40) to form a contaminant-catching cavity (74) opening to the annular gap (68), with the rotating outer side wall (52) and the minimal annular gap (68) co-operating to exclude contaminants from the contaminant-catching cavity (74).

3. A unitized wheel bearing seal assembly according to claim 2, characterised in that the first lip (58) of the seal (56) has clearance from the axially outer side wall (52), and that the annular gap (68) and the clearance of the first lip (58) from the axially outer side wall (52) allow the second casing (40) to be moved slightly axially inwardly to increase the sealing bias of the second sealing lip (60) against the axially outer side wall (52) to compensate for wear of the said second sealing lip (60).

4. A unitized wheel bearing seal assembly according to any one of claims 1 to 3, characterised in that the second sheet metal casing (40) is press-fitted to a rotatable cylindrical surface (30) as aforesaid comprising the outer diameter of a housing (16) of a constant velocity joint (18).

## Patentansprüche

1. Vereinheitlichte Radlager-Dichtanordnung, bei der eine ringförmige Metallblech-Gehäuseanordnung (38, 40), die eine Lippendichtung (56) enthält, zwischen eine nichtdrehbare Zylinderfläche (28) und eine drehbare, mit der nichtdrehbaren Zylinderfläche (28) konzentrische Zylinderfläche (30) eingepaßt ist, dadurch gekennzeichnet, daß die Lagerdichtanordnung ein einheitliches erstes Metallblechgehäuse (38) umfaßt mit einer Zylinderwand (42), die zum Preßpassen mit der nichtdrehbaren Zylinderfläche (28) ausgelegt ist, ein einheitliches zweites Blechmetallgehäuse (40) mit einer mit der Zylinderwand (42) des ersten Gehäuses (38) konzentrischen Zylinderwand (50), die ausgelegt ist, mit der zur nichtdrehbaren Zylinderfläche (28) konzentrischen, drehbaren Zylinderfläche (30) preßgepaßt zu werden, wobei das zweite Gehäuse (40) eine axial äußere Seitenwand (52) besitzt, die ausgelegt ist, der Umgebung ausgesetzt zu werden und die sich von seiner Zylinderwand (50) radial nach außen erstreckt, und eine Dichtung (56) mit dem ersten Gehäuse (38) verbunden ist und erste (58) und zweite (60) ungefederte integrale Lippen enthält, von denen die erste Lippe (58) sich in Dichtanlage mit der Zylinderwand (50) des zweiten Gehäuses (40) mit einem spitzen Winkel bezüglich derselben erstreckt, um so radial nach außen davon weg flexibel zu sein, die zweite Lippe (60) sich in Dichtanlage mit der axial äußeren Seitenwand (52) mit einem spitzen Winkel bezüglich derselben erstreckt, um so axial nach innen von der Seitenwand (52) weg flexibel zu sein, die Dichtlippen (58 und 60) weiter einen Schmierstoff-Hohlraum (72) zwischen sich bilden, wobei der Winkel und die Flexibilität der Lippen (58 und 60) so sind, daß die Lippen (58 und 60) als Einweg-Tore wirken, um Eindringen von Schmierstoff in den Hohlraum (72) und Austreten von Schmierstoff aus dem Hohlraum (72) an die Umgebung zu erlauben, jedoch dem Eindringen von Verunreinigungen aus der Umgebung zu dem Hohlraum (72) zu widerstehen.

2. Vereinheitlichte Radlager-Dichtanordnung nach Anspruch 1, dadurch gekennzeichnet, daß sich die axial äußere Seitenwand (52) des zweiten Gehäuses (40) radial von seiner Zylinderwand (50) zu der Zylinderwand (42) des ersten Gehäuses (38) nach außen erstreckt, um von da einen minimalen Ringspalt (68) zu schaffen, und die zweite Lippe (60) auch mit der Zylinderwand (50) des zweiten Gehäuses (40) zusammenwirkt, um einen Verunreinigungen einfangenden Hohlraum (74) zu bilden, der in den Ringspalt (68) mündet, wobei die sich drehende äußere Seitenwand (52) und der minimale Ringspalt (68) zusammenwirken, um Verunreinigungen von dem Verunreinigungen einfangenden Hohlraum (74) auszuschließen.

3. Vereinheitlichte Radlager-Dichtanordnung nach Anspruch 2, dadurch gekennzeichnet, daß die erste Lippe (58) der Dichtung (56) einen Freiraum von der axial äußeren Seitenwand (52) besitzt und daß der Ringspalt (68) und der Freiraum der ersten Lippe (58) von der axial äußeren Seitenwand (52) eine geringfügige Bewegung des zweiten Gehäuses (40) axial nach innen zulassen, um die Dichtvorspannung der zweiten Dichtlippe (60) gegen die axial äußere Seitenwand (52) zu erhöhen und den Verschleiß der zweiten Dichtlippe (60) auszugleichen.

4. Vereinheitlichte Radlager-Dichtanordnung nach einem der Ansprüche 1 bis 3, dadurch gekennzeichnet, daß das zweite Blechmetallgehäuse (40) mit einer drehbaren Zylinderfläche (30) der erwähnten Art preßgepaßt ist, die den Außendurchmesser eines Gehäuses (16) eines Gleichganggelenks (18) umfaßt.

**Revendications**

1. Unité de roulement avec joint d'étanchéité pour roues, dans laquelle un ensemble annulaire (38, 40) en tôle formant boîtier et logeant un joint (56) du type à lèvres est inséré entre une surface cylindrique fixe (28) et une surface cylindrique rotative (30) concentrique à la surface fixe (28), caractérisé en ce qu'elle comporte un premier boîtier (38) en tôle formant unité et comprenant une paroi cylindrique (42) adaptée pour être montée avec ajustage serré sur la surface cylindrique fixe (28), un second boîtier en tôle (40) formant unité et comprenant une paroi cylindrique (50) concentrique à la paroi cylindrique (42) du premier boîtier (38) et adaptée pour être montée avec ajustage serré sur la surface cylindrique rotative (30) concentrique à la surface fixe (28), le second boîtier (40) comporte une paroi latérale axialement externe (52) adaptée pour être exposée au milieu ambiant et s'étendant radialement vers l'extérieur à partir de sa paroi cylindrique (50), et un joint d'étanchéité (56) relié au premier boîtier (38) et comprenant une première (58) et une seconde (60) lèvres incorporées et non sollicitées élastiquement la première lèvre (58) s'étendant pour coopérer de façon étanche avec la paroi cylindrique (50) du second boîtier (40) sous un angle aigu par rapport à celui-ci de façon à être élastique radialement vers l'extérieur à partir de celui-ci, la seconde lèvre (60) s'étendant pour coopérer de façon étanche avec la paroi latérale axialement externe (52) sous un angle aigu par rapport à celle-ci de façon à être élastique axialement vers l'intérieur à partir de ladite paroi latérale (52), les lèvres d'étanchéité (58, 60) formant en outre entre elles une cavité de lubrification (72), l'angle et l'élasticité des lèvres (58, 60) étant tels que lesdites lèvres (58, 60) fonctionnent comme portes unidirectionnelles afin de permettre l'admission de lubrifiant vers la cavité (72) l'évacuation de celui-ci de la cavité (72) vers le milieu ambiant tout en empêchant l'admission de contaminants du milieu ambiant vers la cavité (72).

2. Unité de roulement avec joint d'étanchéité pour roues suivant la revendication 1, caractérisé en ce que la paroi latérale axialement externe (52) du second boîtier (40) s'étend radialement vers l'extérieur à partir de sa paroi cylindrique (50) vers la paroi cylindrique (42) du premier boîtier (38) afin de former une fente annulaire minimale (68), et en ce que la seconde lèvre (60) coopère aussi avec la paroi cylindrique (50) du second boîtier (40) afin de former une cavité (74) de recueil de contaminants qui communique avec la fente annulaire (68), la paroi latérale rotative externe (52) et la fente annulaire minimale (68) coopérant afin d'exclure des contaminants de la cavité (74) de recueil de contaminants.

3. Unité de roulement avec joint d'étanchéité pour roues suivant la revendication 2, caracterisé en ce que la première lèvre (58) du joint d'étanchéité (56) est espacée de la paroi latérale axialement externe (52), et en ce que la fente annulaire (68) et l'espace entre la premiere lèvre (58) et la paroi latérale axialement externe (52) permettent un léger déplacement du second boîtier (40) axialement vers l'intérieur afin d'augmenter la précontrainte d'étanchement de la seconde lèvre d'étanchéité (60) contre la paroi latérale axialement externe (52) afin de compenser l'usure de ladite seconde lèvre d'étanchéité (60).

4. Unité de roulement avec joint d'étanchéité pour roues suivant l'une quelconque des revendications 1 à 3, caractérisé en ce que le second boîtier (40) en tôle est monté, comme déjà mentionné, avec ajustage serré sur une surface cylindrique rotative (30) comprenant le diamètre extérieur d'un boîtier (16) d'un joint à double cardan (18).

EP 0 154 424 B1

Fig. 1

Fig. 2